# EUROPEAN PATENT SPECIFICATION

(11) **EP 3 521 105 B1**
(45) Date of publication and mention of the grant of the patent: **09.03.2022**
(21) Application number: 19154909.6
(22) Date of filing: 31.01.2019
(51) Int. Cl.: B60N 2/28

(54) **STRAP INDICATOR**
GURTANZEIGER
INDICATEUR DE SANGLE

(30) Priority: 31.01.2018 AU 2018900291
(43) Date of publication of application: 07.08.2019
(73) Proprietor: Britax Childcare Pty Ltd., Port Melbourne, Victoria 3207 (AU)
(72) Inventor: MACIEJCZYK, Wieslaw, Port Melbourne, Victoria 3207 (AU)
(74) Representative: Richardt Patentanwälte PartG mbB

(56) References cited:
- WO-A1-2005/092676
- CN-B- 104 290 712
- FR-A1- 2 946 582
- US-A- 5 361 959
- US-A- 5 630 645

## Description

### FIELD OF THE INVENTION

This invention relates to a strap indicator used with a connecting strap to provide a visual indication of tension in the strap and/or the removal of unacceptable slack within the connection strap.

### BACKGROUND

Examples of such connection straps are tether straps used with motor vehicle child safety seats. One of these straps, top tether straps, is used to secure the head end of a child safety seat with respect to an anchorage location on the vehicle. Due to the different configuration of motor vehicle rear seats from one model to another and the location of the anchorage point in relation to the seat, the tether strap is adjustable in length so that the strap is can be brought to the correct tension by the user during installation of the safety seat. The document US5630645 shows an example of such safety seat.

A significant safety concern is the possibility for a child safety seat to be installed in a vehicle with incorrect tension being applied to the tether strap. Of particular concern is if the strap is slack.

Clearly, it is undesirable if the strap is not tight or has actual slackness. This would mean that the head end of the safety seat would be able to move forward until the strap became tight. However, even if there is no slack in the strap, it may still be able to be tightened further. There will be some elasticity in the strap as well as give in the vehicle seat and safety seat which will mean that some tension should be applied to the strap to ensure less forward movement of the seat than might otherwise be the case.

The installation of the safety seat is unsatisfactory where the tether strap has slack and inadequate tension. Without the tether strap being adjusted to have some tension, the head end of the safety seat is able to move forward and may move beyond acceptable allowable limits in a collision.

One form of existing tension indication for straps is to make use of an elastic member with each end of the elastic member secured to a bight of a strap. In this case, the bight of the strap is a semi-circular loop where the length of the loop exceeds the length of the elastic member connecting the bight. Tension applied to the strap will result in the elastic member stretching and in turn straightening of the bend, bight or loop. This movement can be used to reveal a visual indication of applied tension. For example, a coloured section of material may be secured to the tether strap which is hidden when there is no tension in the tether strap but is exposed, such as extending from a cover. When tension is applied to the tether strap, the elastic member is stretched and the bight of the tether strap straightens and reveals the coloured section. This provides a visual indication of the tether strap being under some tension.

A problem with existing tension indicators is they only provide an indication with one orientation of the strap. In the case of a convertible child seat which is capable of being positioned on a vehicle seat both in a forward and rearward facing position, it would result in the indication of tension being only provided when the strap is in one position. However, the tether strap for a convertible safety seat needs to extend in opposite directions away from the head end of the safety seat and therefore there is a need to overcome the problem of providing a visual indication with the tether strap in not just one orientation but both orientations.

The present invention provides an alternative indication arrangement which overcomes the above problem.

### SUMMARY OF THE INVENTION

The invention provides for a tether strap for securing a convertible child safety seat to an anchorage location within a vehicle and a convertible child safety seat with a tether strap as specified in the independent claims. Embodiments are given in the dependent claims.

One embodiment concerns a convertible child safety seat adapted to be positioned on a vehicle seat in a forward facing position or a rearward facing position. The convertible child safety seat comprises a seat portion for a child. The seat portion for the child is the spatial volume (receiving area) for receiving the child, confined by the portions (seat surface, backrest and headrest area) of the child safety seat that come into contact with the child. The convertible child safety seat further comprises a tether strap, wherein the tether strap is secured to the child safety seat. The tether strap comprises securing means adapted to secure the tether strap to the backrest portion of the safety seat such that two portions of the tether strap extend from the child safety seat, wherein the two portions of the tether strap extending from the child safety seat e joint by the length adjustment means. The securing to the backrest portion of the safety seat may be via securing means e.g. a rivet, a bold or a combination of a three bar slide and a two bar slide. Hereby, the securing means, in particular the three bar slide and the two bar slide, may be located on the outside of the backrest portion of the safety seat. The tether strap further comprises indicator means comprising indicator portions, wherein the indicator portions are positioned on opposing sides of the same portion of the tether strap and are adapted to move between a concealed position when no tension is applied to the tether strap and a revealed position when tension is applied to the tether strap. The indicator portions are adapted to come into view laterally to the seat portion if a required tension is applied to the tether strap, regardless if the child safety seat is positioned on the vehicle seat in a forward facing position or a rearward facing position.

The tether strap may be a single tether strap, which one end is secured to the head end of the backrest portion of the safety seat via securing means. The one end of the single tether strap may be secured to the centre of the head end of the backrest portion of the safety seat via securing means. Alternatively, the tether strap may be a single tether strap, which is secured to the child safety seat such that two portions of the tether strap extend from the child safety seat. The two portions of the tether strap extending from the child safety seat may be joint by length adjustment means. Alternatively, the tether strap may be comprised of two tether straps, each being secured to the head end of the backrest portion of the safety seat via securing means such that two tether straps extend from the child safety seat. The two tether straps extending from the child safety seat may be joint by length adjustment means.

Further, the tether strap comprises length adjustment means, e.g. length adjustment buckle, strap adjuster or adjustable connector, adapted to adjust the length of the tether strap, thereby to secure the seat and thereby to tension the tether strap. The length adjustment buckle, strap adjuster or adjustable connector may join the two portions of the tether strap extending from the child safety seat. Further, the tether strap comprises connector means, e.g. a latch connector, adapted to secure the tether strap to an anchorage location within the vehicle. The tether strap comprises indicator means adapted to come into view laterally to the seat portion if a required tension is applied to the tether strap regardless, if the child safety seat is positioned on the vehicle seat in a forward facing position or a rearward facing position. For example the indicator means are visible when a user is looking at the child safety seat from a side position. The term "lateral" is to be understood in its anatomic meaning with respect to the child to be seated in the child safety seat.

The strap, which may be secured with respect to an anchor point of the vehicle at one end and to an anchor point with the child safety seat at the other end, comprises indicator means showing that the strap has at least had all slack removed therefrom and the indicator means provides an indication from both sides of the strap to allow an indication of tension regardless of which direction the strap extends away from the object.

In accordance with this aspect of the invention, an indicator means may comprise an indicator surface located on both sides of the strap that become visible once the required tension is applied to the strap. Regardless of whether the strap has an indicator surface on both sides or uses an alternative method, it will be such that it provides a visual indication from both sides of the strap so that the direction of the strap away from the object does not matter.

In one embodiment of the invention, the indicator means may comprise an indicator portion on each side of the strap that are concealed with respect to the object when the strap is in a slack state and that become visible by movement of the strap to reveal the indicator portions when they move out of concealment.

In one embodiment of the invention, the indicator means may comprise an indicator portion on the connector means of the tether strap or the length adjustment means of the tether strap that are concealed when the tether strap is in a slack state and that become visible by movement of the tether strap to reveal the indicator portions when they move out of concealment.

The indicator means may include an elastic member such as an elastic strip, metal spring or a portion of elastomeric material which has its ends secured to the tether strap so that a bight of the tether strap loops between the ends of the elastic member. In this way, the elastic member is stretched as the tether strap is tensioned allowing further extension of the tether strap until all of the tension is born by the tether strap. Upon release of the tension, the elastic member retracts the tether strap until the elastic member returns to its initial position which can be used to reveal or conceal the indicator means. The extent of tension that will result in the required amount of stretch of the elastic member can be adjusted by varying the resilience of the elastic member. A less resilient elastic member will result in higher tensions in the strap at the point when the indicator means operates.

In accordance with the above description, at least one of the tension indicator portions will remain visible regardless of whether the safety seat is in a forward or rearward facing position.

The indicator means of the tether strap at the head end of the safety seat may be concealed either by trim used to cover the safety seat or in a position behind the headrest portion of the safety seat. The tether strap may be secured to the safety seat within the head end of the safety seat and exit slots in either side of the safety seat with the tether strap extending from or retracting into each slot providing the means by which the tension indicator portions are revealed or concealed.

An elastic member may be secured with respect to the tether strap to allow a portion of the tether strap to be retracted from the slot once tension is applied to the tether strap and to cause it to be retracted into the slot once the tension is removed. The elastic member may be secured with respect to the tether strap so that a bight or a loop of the tether strap is held out of view within the head end of the safety seat and before the slot. Once tension is applied to the tether strap, it extends from within the slot to reveal the tension indicator portion. As the tension indicator portion is located on either side of the tether strap, it will be visible regardless of the direction the tether strap extends away from the head end of the safety seat.

The tether strap extends to the anchor point from both sides of the head end of the safety seat and preferably, indicator means is provided on both portions of the tether strap adjacent each respective side of the safety seat. However, the invention also includes an indicator means on one side of the safety seat only.

The invention concerns a tether strap for securing a convertible child safety seat to an anchorage location within a vehicle. The tether strep may be used on a safety seat to secure e.g. the head end (upper part of the seat, where the headrest portion of the safety seat is located) of the safety seat with respect to a motor vehicle. The tether strep comprises connector means adapted to secure the tether strap to an anchorage location of the vehicle, length adjustment means adapted to adjust the length of the tether strap, securing means adapted to secure the tether strap to the child safety seat such that two portions of the tether strap extend from the child safety seat, wherein the two portions of the tether strap extending from the child safety seat are joint by the length adjustment means, and indicator means comprising indicator portions. Hereby, the indicator portions are located on opposing sides of the same portion of the tether strap and are adapted to move between a concealed position when no tension is applied to the tether strap and a revealed position when tension is applied to the tether strap.

The concealment of the indicator portion in the relaxed state may be e.g. achieved by a sleeve or the indicator portion may be located within a portion of the child safety seat. The sleeve may be designed or arranged in such a way that it conceals the indicator portion in a relaxed state. The sleeve may be attached to a portion of the tether strap itself or to an anchor location of the vehicle or a child safety seat (e.g. the rear side of a child seat).

The tether strap may further comprise an elastic member, which has its ends secured to the tether strap such that a bend of the tether strap loops between the ends of the elastic member. The elastic member is adapted to pull the indicator portions out of the view when no tension is applied to the strap and is adapted to allow the indicator portions to come into view once the required tension is applied to the tether strap.

Alternatively, the tether strap may further comprise an elastic member, which is secured between two tether strap elements such that two bends of the tether strap loop on both sides of the elastic member. The elastic member is adapted to pull the indicator portions out of the view when no tension is applied to the strap and is adapted to allow the indicator portions to come into the view once the required tension is applied to the tether strap.

In order to fully understand the invention, a preferred embodiment will be described however it will be realised that the scope of the invention is not to be restricted to the precise details of this preferred embodiment and that variations that would be apparent to a skilled addressee are still within the scope of the invention.

### BRIEF DESCRIPTION OF THE DRAWINGS

This embodiment is illustrated in the following drawings in which:
Fig 1 shows a rear view of a head end of a safety seat including a tether strap attached in accordance with one embodiment;
Fig 2 shows a safety seat installed on a motor vehicle seat in a forward facing position;
Fig 3 shows a safety seat installed on a motor vehicle seat in a rearward facing position;
Fig 4 shows a cross-section of the head end of a safety seat about line 4-4 from Fig 2; and
Figs 5a and 5b show an elastic member secured to a tether strap with an attached tension indicator portion.

### DETAILED DESCRIPTION OF AN EXAMPLE EMBODIMENT

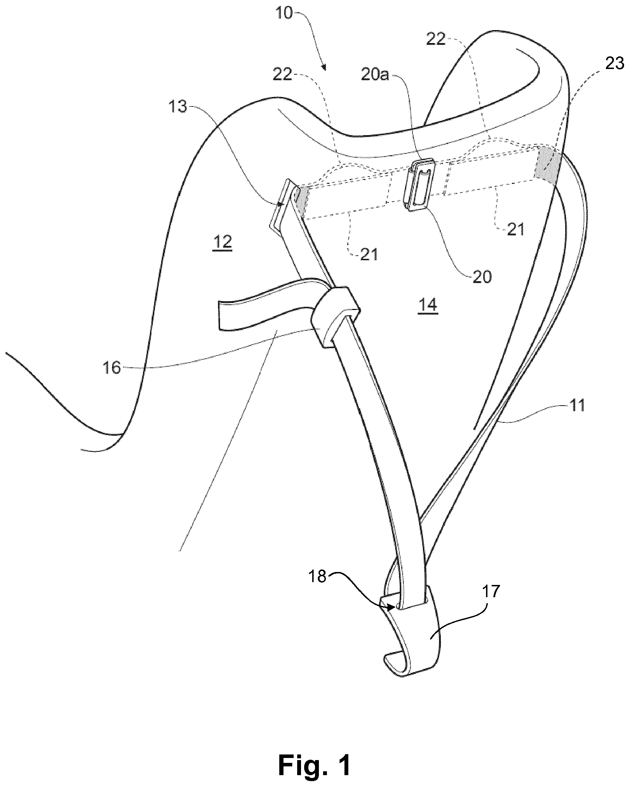

In Fig 1, an embodiment of the invention is depicted. The safety seat 10 has a tether strap 11 secured at its head end. In this embodiment, the tether strap 11 extends through apertures 13 that are located in the side wings of the head end portion 12 of the safety seat 10 with the tether strap 11 being secured to the safety seat 10 within its head end. The safety seat 10 is moulded from polypropylene and is a unitary moulding having a wall thickness of between 3mm-5mm. However, it will be appreciated that other materials and manufacturing methods could be used such as solid moulding in polystyrene foam, vacuum forming and blow moulding.

The tether strap 11 comprises a length of webbing that extends away from either side of the safety seat 10. Two portions of the tether strap 11 are joined by an adjustable connector 16 which allows the length of the tether strap 11 to be adjusted. A latch connector 17 is slidably attached by locating or sliding the tether strap 11 through an aperture 18 of the latch connector 17. The latch connector 17 enables the tether strap 11 to be secured with respect to an anchorage location (not shown), e.g. on a motor vehicle parcel shelf. Once the latch connector 17 is attached to the anchorage location, the length of the tether strap 11 can be adjusted via the adjustable connector 16 to securely hold the safety seat 10 with respect to the motor vehicle seat.

It is important that all slack is removed from the tether strap 11 and that adequate tension is applied to the tether strap 11 in order to ensure safe installation of the safety seat 10. The invention as described below will provide a means of visually indicating when all slack is removed through adequate tension being applied to the tether strap 11.

As seen in Fig 1, the tether strap 11 is position secured to the backrest portion 14 of the safety seat 10 via the combination of a three bar slide 20 and a two bar slide 20a. Hereby, the three bar slide 20 and the two bar slide 20a are located on the outside of the backrest portion 14 of the safety seat 10. In this embodiment, on either side of the slides 20 and 20a, clastic members 21 arc secured to the tether strap 11 so that a bight, bend or loop 22 is formed in the tether strap 11. Hence, between slides 20 and 20a and one side wing one of two elastic members 21 is secured to the tether strap 11 and between slides 20 and 20a and the opposite side wing (not shown) a second elastic members 21 is secured to the tether strap 11. As depicted in Fig. 1, the elastic members 21 are secured to the tether strap 11 within the backrest 14 (situated near the backrest portion 14 side of the motor vehicle seat) and are each let to an aperture or slot 13. In this embodiment, each end of each elastic member 21 is secured by being stitched to the tether strap 11. The elastic member 21 may comprise a rubber or elasticated strap or elastomeric member. When the elastic member 21 is in its relaxed state, the loop 22 is held in position. As tension is applied to the tether strap 11, the elastic member 21 stretches and the loop 22 straightens. This results in the tether strap 11 extending out of the slots 13. This in turn reveals indicator portions 23 that are held behind the backrest 14 and before the slots 13 in the relaxed state. Accordingly, the tension indicator portions 23 are hidden when the tether strap 11 is in an untensioned relaxed state, but are revealed once tension is applied to the tether strap 11 and the loops 22 straighten. In this embodiment, the indicator means comprises the combination of elastic member 21, the loop 22 and the indicator portions 23. As depicted, the indicator portions 23 are arranged on the same side of the strap 11, meaning they are arranged on the front side of the strap 11 in this view. Further, at least one of the indicator portions 23 may be arranged on the opposite side of the strap 11, meaning they may also be arranged on the back side (not shown) of the strap 11 in this view.

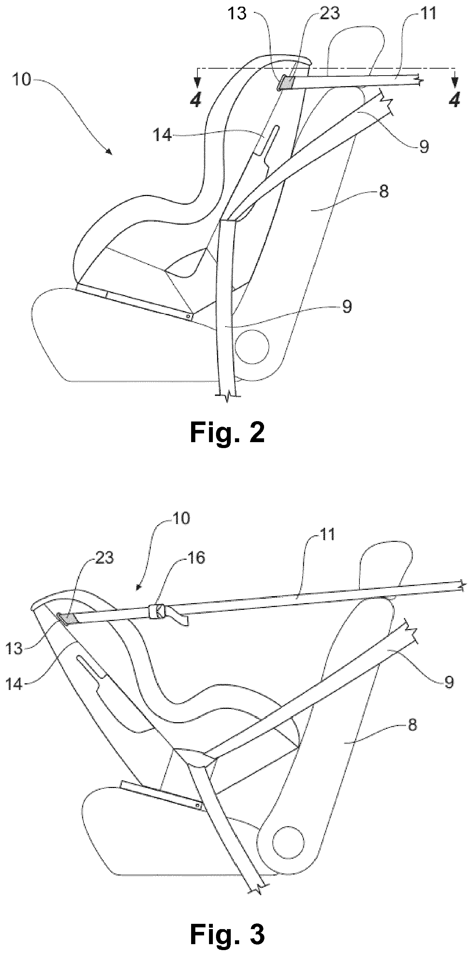

Figs 2 and 3 show the same safety seat 10 installed in two different orientations on a motor vehicle seat 8. As indicated, the safety seat 10 has in the area of the backrest portion 14 means through which a safety belt 9 can be guided to secure the safety seat 10. Fig 2 shows a forward facing configuration and Fig 3 shows a rear facing configuration. In the forward facing configuration, the tether strap 11 extends rearwardly of the head end of the safety seat 10. In the rear facing configuration shown in Fig 3, the tether strap 11 extends forwardly of the head end of the safety seat 10. By placing the indicator portions 23 on both sides (front and back side) of the tether strap 11, a visual indication is provided in both configurations of the safety seat 10.

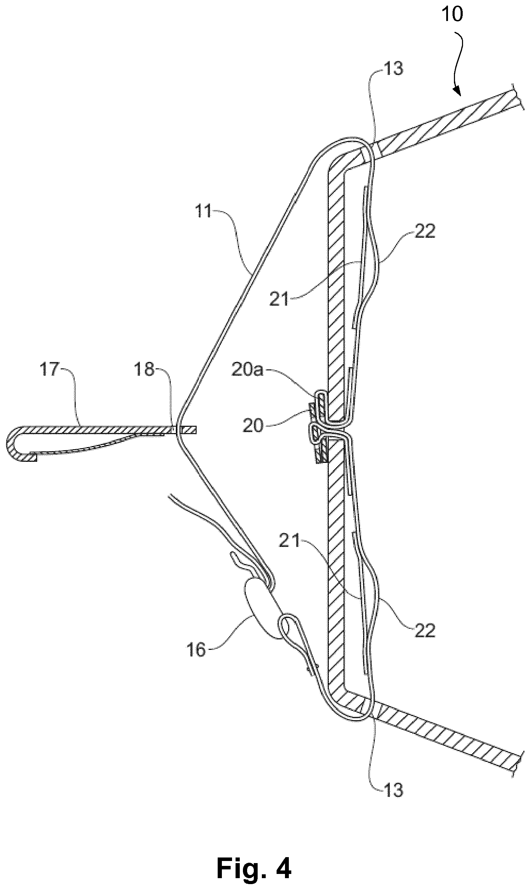

Fig 4 shows a cross-section view of the head end of the safety seat 10 about line 4-4 in Fig 2. It shows the tether strap 11 secured by the two slides 20 and 20a and the tether strap 11, which is guided inside the safety seat 10 in the area of the backrest, extending out of apertures 13 in the wall of the safety seat 10. The elastic members 21 are located within the safety seat 10 between the apertures 13. They are secured at each end to the tether strap 11 such that the tether strap 11 forms loop portions 22. In the relaxed state, as shown in Fig 4, the elastic members 21 hold the tether strap in a loop-shaped position (as shown). The indicator portions 23 on each side of the tether strap 11 (not shown in Fig 4) and on within the area of both side wings of the safety seat (not shown in Fig 4) are held within the safety scat 10 between the apertures 13 and arc therefore not visible.

Once tension is applied to the tether strap 11 the elastic members 21 are stretched and the loop portions 22 of the tether strap 11 straighten, hence allowing for the portions of the tether strap 11 holding the indication portions 23 to extend out of the apertures 13. Once this occurs, the indicator portions 23 become visible. As the indicator portions 23 are on each side (front side and back side) of the tether strap 11, they will be visible when the safety seat 10 is in either the forward or rearward configuration.

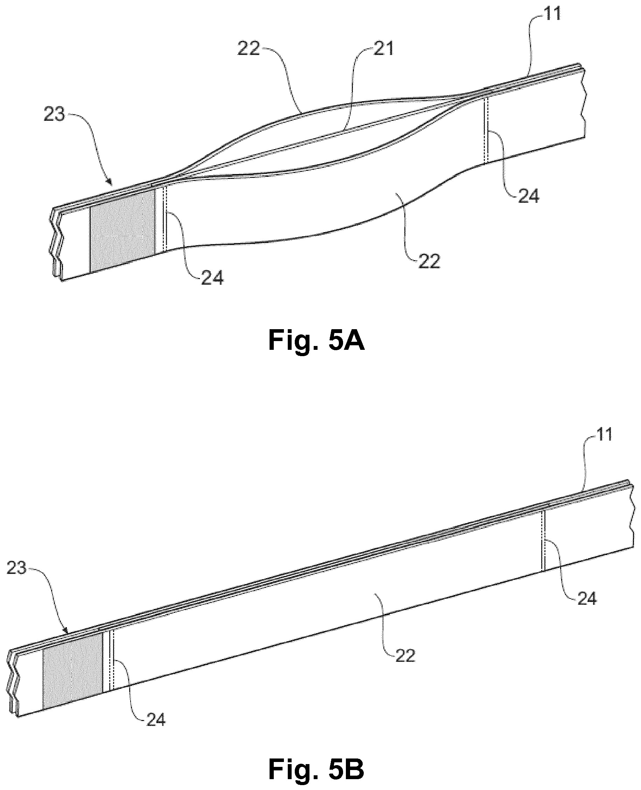

Figs 5a and 5b show an alternative construction for incorporating the elastic members 21 into the tether strap 11. In this embodiment, the tether strap 11 between the apertures 13 comprises a sandwich of two strap elements with the elastic member 21 stitched between the two strap elements to create two loop portions 22, 22, one on either side of the elastic member 21. As seen in Fig 5a, the elastic member 21 is stitched at (indicated by dotted line 24) at each end to be held between the strap elements that are part of the tether strap 11. The indicator portions 23 are positioned at one side (front side) of the loop portions 22 and Fig 5b illustrates the tether strap 11 with tension showing the movement of the indicator portion 23. It shall be noted, that in this embodiment the indicator portions 23 are also positioned at the other side (back side) of the loop portions 22 to ensure that a visual indication is provided once tension is applied to the tether strap regardless of the direction that the tether strap leads away from the safety seat 10.

The elastic members 21 may comprise elasticated fabric, but also may comprise a strip of elastomeric material such as rubber. In addition, metal springs may also be substituted and work equally as well.

The location of the indicator portions 23 on either side (opposing sides, meaning the front side and the back side) of the tether strap ensure that a visual indication is provided once tension is applied to the tether strap regardless of the direction that the tether strap leads away from the safety seat 10. The elastic member 21 has sufficient tension to ensure that it will not commence stretching until tension is placed into the tether strap 11. In this way, a visual indication is provided once all slack is removed and will assist in ensuring correct installation of the child safety seat 10.

Throughout the specification and the claims that follow, unless the context requires otherwise, the words "comprise" and "include" and variations such as "comprising" and "including" will be understood to imply the inclusion of a stated integer or group of integers, but not the exclusion of any other integer or group of integers.

The reference to any prior art in this specification is not, and should not be taken as, an acknowledgement of any form of suggestion that such prior art forms part of the common general knowledge.

## Claims

1. A tether strap (11) for securing a convertible child safety seat (10) to an anchorage location within a vehicle, comprising:
- connector means (17) adapted to secure the tether strap (11) to the anchorage location within the vehicle;
- length adjustment means (16) adapted to adjust the length of the tether strap (11);
- securing means (20, 20a) adapted to secure the tether strap (11) to the child safety seat (10) such that two portions of the tether strap (11) extend from the child safety seat (10), wherein the two portions of the tether strap (11) extending from the child safety seat (10) are joint by the length adjustment means (16); and the tether strap (11) is
**characterized in that** it further comprises:
- indicator means comprising indicator portions (23), wherein the indicator portions (23) are positioned on opposing sides of the same portion of the tether strap (11) and are adapted to move between a concealed position when no tension is applied to the tether strap (11) and a revealed position when tension is applied to the tether strap (11).

2. The tether strap (11) of claim 1, further comprising an elastic member (21), which has its ends secured to the tether strap (11) such that a bight (22) of the tether strap (11) loops between the ends of the elastic member (21).

3. The tether strap (11) of claim 1, further comprising an elastic member (21), which is secured between two tether strap (11) elements such that two bights (22, 22) of the tether strap (11) loop on both sides of the elastic member (21).

4. A convertible child safety seat (10) adapted to be positioned on a vehicle seat (8) in a forward facing position or a rearward facing position, comprising a seat portion for a child and the tether strap (11) of claim 1, wherein the tether strap (11) is secured to the child safety seat (10) such that two portions of the tether strap (11) extend from the child safety seat (10), wherein the two portions of the tether strap (11) extending from the child safety seat (10) are joint by the length adjustment means (16) of the tether strap (11), and wherein the indicator portions (23) are adapted to come into view laterally to the seat portion if a required tension is applied to the tether strap (11) regardless if the child safety seat (10) is positioned on the vehicle seat (8) in a forward facing position or a rearward facing position.

5. The convertible child safety seat (10) of claim 4, further comprising an elastic member (21), which has its ends secured to the tether strap (11) such that a bight (22) of the tether strap (11) loops between the ends of the elastic member (21), wherein the elastic member is adapted to pull the indicator portions (23) out of the view when no tension is applied to the strap (11) and being adapted to allow the indicator portions (23) to come into the view once the required tension is applied to the tether strap (11).

6. The convertible child safety seat (10) of claim 4, further comprising an elastic member (21), which is secured between two tether strap elements such that two bights (22, 22) of the tether strap (11) loop on both sides of the elastic member (21), the elastic member (21) being adapted to pull the indicator portions (23) out of the view when no tension is applied to the strap (11) and being adapted to allow the indicator portions (23) to come into the view once the required tension is applied to the tether strap (11).

7. The convertible child safety seat (10) of claim 4, wherein the indicator portions (23) comprise a colour different to the colour of the tether strap (11).

8. The convertible child safety seat (10) according to claim 4, wherein the two portions of the tether strap (11) are adapted to extend from the child safety seat (10) such that the head end (12) of the child safety seat (10) is securable with respect to the motor vehicle.

9. The convertible child safety seat (10) according to one of the claims 4 to 8, wherein the tension indicator portions (23) are positioned on the tether strap (11) on one side of the safety seat (10).

10. The convertible child safety seat (10) according to one of the claims 4 to 8, wherein the tension indicator portions (23) are positioned on the tether strap (11) on both sides of the safety seat (10).

11. The convertible child safety seat (10) according to claim 8, wherein the head end (12) of the safety seat (10) has a slot (13) on each side through which the tether strap (11) passes, wherein the indicator portions (23) are adapted to be within the head end (12) of the safety seat (10) when no tension is applied to the tether strap (11) and are adapted to move out past the slot (13) and into the view when tension is applied to the tether strap (11).

12. A convertible child safety seat (10) according to one of the claims 4 to 11, wherein the connector means (17) is a latch connector.

13. A convertible child safety seat (10) according to one of the claims 4 to 12, wherein the connector means (17) of the tether strap (11) or the length adjustment means (16) of the tether strap (11) comprises the indicator means.

## Patentansprüche

1. Haltegurt (11) zum Sichern eines umwandelbaren Kindersicherheitssitzes (10) an einer Verankerungsposition innerhalb eines Fahrzeugs, umfassend:
- Verbindermittel (17), dazu angepasst, den Haltegurt (11) an der Verankerungsposition innerhalb des Fahrzeugs zu sichern;
- Längeneinstellmittel (16), dazu angepasst, die Länge des Haltegurts (11) einzustellen;
- Sicherungsmittel (20, 20a), dazu angepasst, den Haltegurt (11) am Kindersicherheitssitz (10) zu sichern, sodass sich zwei Abschnitte des Haltegurtes (11) vom Kindersicherheitssitz (10) erstrecken, wobei die zwei sich vom Kindersicherheitssitz (10) erstreckenden Abschnitte des Haltegurts (11) durch das Längeneinstellmittel (16) verbunden sind; und der Haltegurt (11) ist **dadurch gekennzeichnet, dass** er ferner umfasst:
- Anzeigermittel, umfassend Anzeigerabschnitte (23), wobei die Anzeigerabschnitte (23) auf gegenüberliegenden Seiten des gleichen Abschnitts des Haltegurtes (11) positioniert sind und dazu angepasst sind, sich zwischen einer verborgenen Position, wenn keine Spannung auf den Haltegurt (11) angewendet wird, und einer freiliegenden Position, wenn Spannung auf den Haltegurt (11) angewendet wird, zu bewegen.

2. Haltegurt (11) nach Anspruch 1, ferner umfassend ein elastisches Element (21), dessen Enden am Haltegurt (11) gesichert sind, sodass sich zwischen den Enden des elastischen Elements (21) eine Schleife (22) des Haltegurts (11) windet.

3. Haltegurt (11) nach Anspruch 1, ferner umfassend ein elastisches Element (21), das zwischen zwei Elementen des Haltegurts (11) gesichert ist, sodass sich zwei Schleifen (22, 22) des Haltegurts (11) auf beiden Seiten des elastischen Elements (21) winden.

4. Umwandelbarer Kindersicherheitssitz (10), dazu angepasst, auf einem Fahrzeugsitz (8) in einer vorwärts weisenden Position oder einer rückwärts weisenden Position positioniert zu sein, umfassend einen Sitzabschnitt für ein Kind und den Haltegurt (11) nach Anspruch 1, wobei der Haltegurt (11) so an dem Kindersicherheitssitz (10) gesichert ist, dass sich zwei Abschnitte des Haltegurts (11) vom Kindersicherheitssitz (10) erstrecken, wobei die zwei sich vom Kindersicherheitssitz (10) erstreckenden Abschnitte des Haltegurts (11) durch das Längeneinstellmittel (16) des Haltegurts (11) verbunden sind, und wobei die Anzeigerabschnitte (23) dazu angepasst sind, seitlich vom Sitzabschnitt in die Sicht zu kommen, wenn eine erforderliche Spannung auf den Haltegurt (11) angewendet wird, ungeachtet dessen, ob der Kindersicherheitssitz (10) auf dem Fahrzeugsitz (8) in einer vorwärts weisenden Position oder einer rückwärts weisenden Position positioniert ist.

5. Umwandelbarer Kindersicherheitssitz (10) nach Anspruch 4, ferner umfassend ein elastisches Element (21), dessen Enden am Haltegurt (11) gesichert sind, sodass sich eine Schleife (22) des Haltegurts (11) zwischen den Enden des elastischen Elements (21) windet, wobei das elastische Element dazu angepasst ist, die Anzeigerabschnitte (23) aus der Sicht zu ziehen, wenn auf den Gurt (11) keine Spannung angewendet wird, und dazu ausgelegt ist, den Anzeigerabschnitten (23) zu gestatten, in die Sicht zu kommen, sobald auf den Haltegurt (11) die erforderliche Spannung angewendet wird.

6. Umwandelbarer Kindersicherheitssitz (10) nach Anspruch 4, ferner umfassend ein elastisches Element (21), das so zwischen zwei Haltegurtelementen gesichert sind, dass sich zwei Schleifen (22, 22) des Haltegurts (11) auf beiden Seiten des elastischen Elements (21) winden, wobei das elastische Element (21) dazu angepasst ist, die Anzeigerabschnitte (23) aus der Sicht zu ziehen, wenn auf den Gurt (11) keine Spannung angewendet wird, und dazu ausgelegt ist, den Anzeigerabschnitten (23) zu ermöglichen, in die Sicht zu kommen, sobald auf den Haltegurt (11) die erforderliche Spannung angewendet wird.

7. Umwandelbarer Kindersicherheitssitz (10) nach Anspruch 4, wobei die Indikatorabschnitte (23) eine Farbe umfassen, die sich von der Farbe des Haltegurts (11) unterscheidet.

8. Umwandelbarer Kindersicherheitssitz (10) nach Anspruch 4, wobei die zwei Abschnitte des Haltegurts (11) dazu angepasst sind, sich so vom Kindersicherheitssitz (10) zu erstrecken, dass das Kopfende (12) des Kindersicherheitssitzes (10) mit Bezug auf das Motorfahrzeug sicherbar ist.

9. Umwandelbarer Kindersicherheitssitz (10) nach einem der Ansprüche 4 bis 8, wobei die Spannungsanzeigerabschnitte (23) auf dem Haltegurt (11) auf einer Seite des Sicherheitssitzes (10) positioniert sind.

10. Umwandelbarer Kindersicherheitssitz (10) nach einem der Ansprüche 4 bis 8, wobei die Spannungsanzeigerabschnitte (23) auf dem Haltegurt (11) auf beiden Seiten des Sicherheitssitzes (10) positioniert sind.

11. Umwandelbarer Kindersicherheitssitz (10) nach Anspruch 8, wobei das Kopfende (12) des Sicherheitssitzes (10) einen Schlitz (13) auf jeder Seite, durch den der Haltegurt (11) verläuft, aufweist, wobei die Indikatorabschnitte (23) dazu angepasst sind, innerhalb des Kopfendes (12) des Sicherheitssitzes (10) zu sein, wenn auf den Haltegurt (11) keine Spannung angewendet wird, und dazu angepasst sind, sich über den Schlitz (13) hinaus nach außen und in die Sicht zu bewegen, wenn auf den Haltegurt (11) Spannung angewendet wird.

12. Umwandelbarer Kindersicherheitssitz (10) nach einem der Ansprüche 4 bis 11, wobei das Verbindermittel (17) ein Rastverbinder ist.

13. Umwandelbarer Kindersitz (10) nach einem der Ansprüche 4 bis 12, wobei das Verbindermittel (17) des Haltegurts (11) oder das Längeneinstellmittel (16) des Haltegurts (11) das Anzeigermittel umfasst.

## Revendications

1. Sangle d'attache (11) permettant de fixer un siège de sécurité enfant (10) convertible à un lieu d'ancrage à l'intérieur d'un véhicule, comprenant :
- un moyen connecteur (17) approprié pour fixer la sangle d'attache (11) au lieu d'ancrage à l'intérieur du véhicule ;
- un moyen d'ajustement de la longueur (16) approprié pour ajuster la longueur de la sangle d'attache (11) ;
- un moyen de fixation (20, 20a) approprié pour fixer la sangle d'attache (11) au siège de sécurité enfant (10) de sorte que deux parties de la sangle d'attache (11) s'étendent à partir du siège de sécurité enfant (10),
où les deux parties de la sangle d'attache (11) s'étendant à partir du siège de sécurité enfant (10) sont assemblées par le moyen d'ajustement de la longueur (16) ; et la sangle d'attache (11) est **caractérisée en ce qu'**elle comprend en outre :
- un moyen indicateur comprenant des parties d'indicateur (23), où les parties d'indicateur (23) sont positionnées sur des côtés opposés de la même partie de la sangle d'attache (11) et sont adaptées pour se déplacer entre une position cachée lorsque aucune tension n'est appliquée à la sangle d'attache (11) et une position mise en évidence lorsqu'une tension est appliquée à la sangle d'attache (11).

2. Sangle d'attache (11) selon la revendication 1, comprenant en outre un élément élastique (21) qui a ses extrémités fixées à la sangle d'attache (11), de sorte qu'une anse (22) de la sangle d'attache (11) fait une boucle entre les extrémités de l'élément élastique (21).

3. Sangle d'attache (11) selon la revendication 1, comprenant en outre un élément élastique (21) qui est fixé entre deux éléments de la sangle d'attache (11) de sorte que deux anses (22, 22) de la sangle d'attache (11) forment des boucles sur les deux côtés de l'élément élastique (21).

4. Siège de sécurité enfant (10) convertible approprié pour être positionné sur un siège de véhicule (8) dans une position faisant face à l'avant ou une position faisant face à l'arrière, comprenant une partie de siège pour un enfant et la sangle d'attache (11) selon la revendication 1, où la sangle d'attache (11) est fixée au siège de sécurité enfant (10) de sorte que deux parties de la sangle d'attache (11) s'étendent à partir du siège de sécurité enfant (10), où les deux parties de la sangle d'attache (11) s'étendant à partir du siège de sécurité enfant (10) sont assemblées par le moyen d'ajustement de la longueur (16) de la sangle d'attache (11), et où les parties d'indicateur (23) sont appropriées pour être visibles latéralement par rapport à la partie de siège si une tension adéquate est appliquée à la sangle d'attache (11), indépendamment du fait que le siège de sécurité enfant (10) se trouve positionné sur le siège de véhicule (8) dans une position faisant face à l'avant ou dans une position faisant face à l'arrière.

5. Siège de sécurité enfant (10) convertible selon la revendication 4, comprenant en outre un élément élastique (21) qui a ses extrémités fixées à la sangle d'attache (11) de sorte qu'une anse (22) de la sangle d'attache (11) fait une boucle entre les extrémités de l'élément élastique (21), où l'élément élastique est approprié pour pousser les parties d'indicateur (23) hors de la vue lorsque aucune tension n'est appliquée à la sangle (11) et étant approprié pour permettre aux parties d'indicateur (23) de devenir visibles une fois que la tension adéquate est appliquée à la sangle d'attache (11).

6. Siège de sécurité enfant (10) convertible selon la revendication 4, comprenant en outre un élément élastique (21), qui est fixé entre deux éléments de la sangle d'attache, de sorte que deux anses (22, 22) de la sangle d'attache (11) forment des boucles sur les deux côtés de l'élément élastique (21), l'élément élastique (21) étant approprié pour pousser les parties d'indicateur (23) hors de la vue lorsque aucune tension n'est appliquée à la sangle (11) et étant approprié pour permettre aux parties d'indicateur (23) de devenir visibles une fois que la tension adéquate est appliquée à la sangle d'attache (11).

7. Siège de sécurité enfant (10) convertible selon la revendication 4, dans lequel les parties d'indicateur (23) comprennent une couleur différente de la couleur de la sangle d'attache (11).

8. Siège de sécurité enfant (10) convertible selon la revendication 4, dans lequel les deux parties de la sangle d'attache (11) sont appropriées pour s'étendre à partir du siège de sécurité enfant (10) de sorte que l'extrémité de la tête (12) du siège de sécurité enfant (10) peut être fixée par rapport au véhicule moteur.

9. Siège de sécurité enfant (10) convertible selon l'une des revendications 4 à 8, dans lequel les parties d'indicateur (23) de tension sont positionnées sur la sangle d'attache (11) sur un côté du siège de sécurité (10).

10. Siège de sécurité enfant (10) convertible selon l'une des revendications 4 à 8, dans lequel les parties d'indicateur (23) de tension sont positionnées sur la sangle d'attache (11) sur les deux côtés du siège de sécurité (10).

11. Siège de sécurité enfant (10) convertible selon la revendication 8, dans lequel l'extrémité de la tête (12) du siège de sécurité (10) a une fente (13) sur chaque côté, à travers laquelle la sangle d'attache (11) passe, où les parties d'indicateurs (23) sont appropriées pour être à l'intérieur de l'extrémité de la tête (12) du siège de sécurité (10) lorsque aucune tension n'est appliquée à la sangle d'attache (11) et sont appropriées pour se déplacer au dehors au-delà de la fente (13) et être visibles lorsqu'une tension est appliquée à la sangle d'attache (11).

12. Siège de sécurité enfant (10) convertible selon l'une des revendications 4 à 11, dans lequel le moyen connecteur (17) est un connecteur de type loquet.

13. Siège de sécurité enfant (10) convertible selon l'une des revendications 4 à 12, dans lequel le moyen connecteur (17) de la sangle d'attache (11), ou le moyen d'ajustement de la longueur (16) de la sangle d'attache (11), comprend le moyen indicateur.
